# DEMANDE DE BREVET EUROPEEN

(11) **EP 2 410 615 A2**
(43) Date de publication de la demande: **25.01.2012**
(21) Numéro de dépôt: 11173883.7
(22) Date de dépôt: 13.07.2011
(51) Int. Cl.: H01R 13/24, G06F 1/26, G06F 1/16, H01R 13/642

(54) **Socle d'accueil d'un terminal mobile et terminal mobile correspondant**

(30) Priorité: 21.07.2010 FR 1055947
(71) Demandeur: Compagnie Industrielle et Financiere d'Ingenierie Ingenico, 92200 Neuilly sur Seine (FR)
(72) Inventeur: Pavageau, Stéphane, 26600 LA ROCHE DE GLUN (FR); Besoin, Gilles, 54270 ESEY LES NANCY (FR)
(74) Mandataire: de Beaumont, Michel

(57) **Abrégé**

L'invention concerne un socle (23) d'accueil d'un terminal mobile, comportant un ergot (26) en saillie d'une face (23c) du socle selon une direction principale (d26), cet ergot comprenant un pan incliné (27) supportant des contacts électriques (28), dans lequel le plan comprenant le pan incliné (27) intersecte la direction principale (d26) et ladite face (23c) du socle sans intersecter l'ergot. L'invention vise en outre un terminal mobile correspondant.

## Description

### Domaine de l'invention

La présente invention concerne un système comprenant un terminal mobile et un socle d'accueil de ce terminal. Elle vise notamment un système dans lequel, lorsque le terminal est correctement positionné sur son socle, une connexion électrique est formée entre le terminal et le socle. La présente invention sera décrite en relation avec un exemple de système comprenant un terminal de paiement électronique mobile et un socle d'accueil de ce terminal. Elle s'applique toutefois plus généralement à tout système comprenant un terminal mobile et un socle d'accueil correspondant.

### Exposé de l'art antérieur

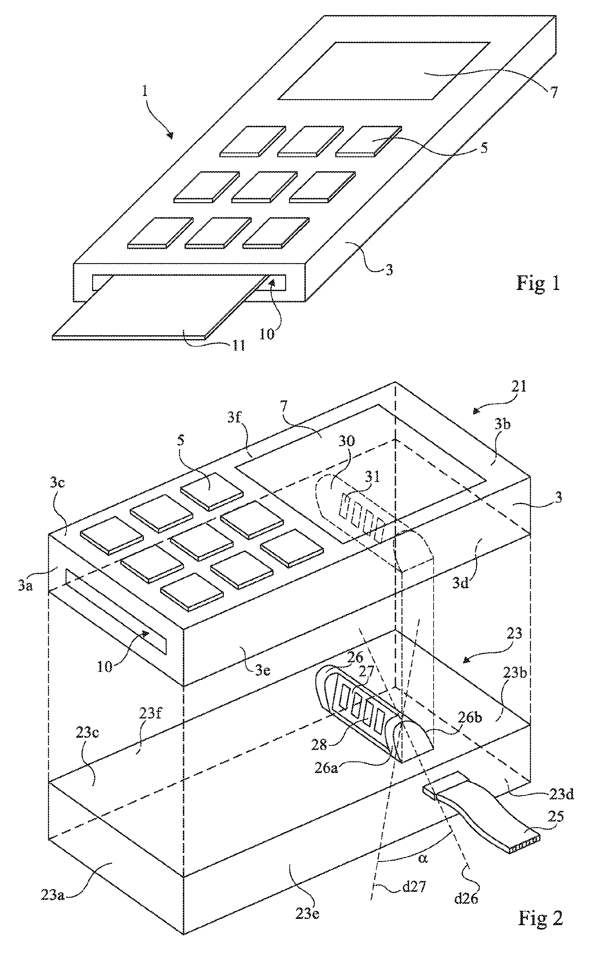

La figure 1 est une vue en perspective représentant de façon très simplifiée un terminal de paiement électronique mobile 1. Le terminal 1 comprend un boîtier 3, contenant notamment une carte de circuits électroniques (non représentée), à laquelle sont reliés divers composants périphériques, ici un clavier 5, un écran d'affichage 7, et un lecteur de carte à puce (non représenté), situé au fond d'une fente 10, ouverte uniquement en façade, dans laquelle un utilisateur peut insérer une carte à puce de paiement 11. D'autres composants périphériques, non représentés, tels qu'une imprimante, un module de communication sans fil, un lecteur de cartes magnétiques, etc., sont généralement prévus. Le boîtier 3 contient en outre des batteries (non représentées) d'alimentation du terminal.

Un terminal de paiement électronique mobile est habituellement fourni avec un socle d'accueil fixe. Le socle peut être relié à un ordinateur par une liaison filaire, par exemple selon la norme USB (de l'anglais "Universal Serial Bus"). Lorsque le terminal est correctement positionné sur son socle, des contacts du terminal viennent s'appuyer contre des contacts du socle, formant une connexion électrique entre le socle et le terminal. Le socle est généralement adapté à fournir de l'énergie électrique au terminal, par exemple pour recharger ses batteries d'alimentation. Il permet également d'échanger des informations avec le terminal.

Généralement, les contacts du socle sont montés sur des ressorts. Chaque contact correspond par exemple à une lame ressort conductrice. Lorsque la fraction du poids du terminal mobile s'exerçant sur les contacts du socle est assez importante, elle permet de maintenir les ressorts des contacts du socle en compression, garantissant ainsi une bonne connexion électrique entre le socle et le terminal.

Toutefois, la tendance actuelle à la miniaturisation des terminaux mobiles conduit à réaliser des terminaux légers, dans lesquels le seul poids du terminal ne suffit pas à garantir une bonne connexion électrique avec le socle.

De plus, dans le domaine des terminaux de paiement mobile, on réalise de préférence des systèmes dans lesquels le socle est adapté à recevoir le terminal dans une position horizontale, ou proche de l'horizontale. On entend ici par "position horizontale" une position habituelle d'utilisation du terminal, dans laquelle l'écran et le clavier sont dans un plan sensiblement parallèle au sol, et sont disposés vers le haut, de façon qu'un utilisateur puisse encore utiliser le terminal lorsque ce dernier repose sur son socle. La fente d'insertion de carte à puce du terminal reste également librement accessible lorsque le terminal repose sur son socle. Dans de tels systèmes, du fait de la position horizontale du terminal, seule une faible fraction du poids du terminal s'exerce sur les contacts du socle (à la différence des systèmes dans lesquels le terminal repose en position verticale sur le socle). Ainsi, la seule gravité ne suffit généralement pas à garantir une bonne connexion électrique avec le socle.

Pour pallier cet inconvénient, on a proposé des systèmes dans lesquels l'utilisateur, lorsqu'il raccroche le terminal sur le socle, doit exercer une force supplémentaire, s'ajoutant au poids du terminal, pour faire franchir au terminal un point de blocage entre le socle et le terminal. Une fois le terminal raccroché, le point de blocage permet de maintenir le terminal dans une position stable garantissant une bonne connexion électrique avec le socle. La prévision d'un point de blocage rend toutefois moins aisés les mouvements de décroché/raccroché du terminal.

### Résumé

Ainsi, un objet d'un mode de réalisation de la présente invention est de prévoir un système comprenant un terminal mobile et un socle d'accueil de ce terminal, palliant au moins en partie certains des inconvénients des solutions de l'art antérieur.

Un autre objet d'un mode de réalisation de la présente invention est de prévoir un tel système garantissant une bonne connexion électrique entre le socle et le terminal lorsque le terminal repose sur le socle.

Un autre objet d'un mode de réalisation de la présente invention est de prévoir un tel système dans lequel les mouvements de décroché et de raccroché du terminal sont facilités par rapport aux solutions de l'art antérieur.

Un autre objet d'un mode de réalisation de la présente invention est de prévoir un tel système dans lequel le socle est adapté à recevoir le terminal en position horizontale.

Ainsi, un mode de réalisation de la présente invention prévoit un socle d'accueil d'un terminal mobile, comportant un ergot en saillie d'une face supérieure selon une direction principale, dans lequel : l'ergot comprend des faces avant et arrière inclinées selon des directions distinctes se rejoignant du côté du sommet de l'ergot ; et l'ergot comprend, du côté de sa face avant, un pan supportant des contacts électriques, incliné par rapport à la direction principale et par rapport à la face avant, et s'étendant sensiblement jusqu'au sommet de l'ergot.

Selon un mode de réalisation de la présente invention, le sommet de l'ergot a une forme arrondie.

Selon un mode de réalisation de la présente invention, les contacts électriques sont à ressort.

Selon un mode de réalisation de la présente invention, l'ergot comprend des joues encadrant le pan incliné, chaque joue ayant la forme d'un pan vertical orienté selon une direction longitudinale par rapport au socle.

Un autre mode de réalisation de la présente invention prévoit un terminal mobile comportant un boîtier présentant un renfoncement selon une direction principale, dans lequel : le renfoncement comprend des parois avant et arrière inclinées selon des directions distinctes se rejoignant du côté du fond du renfoncement ; et le renfoncement comprend, du côté de sa paroi avant, un pan supportant des plages métalliques de connexion électrique, incliné par rapport à la direction principale et par rapport à la paroi avant, et s'étendant sensiblement jusqu'au fond du renfoncement.

Selon un mode de réalisation de la présente invention, on prévoit un terminal dans lequel les plages de contact métalliques s'étendent depuis le fond jusqu'à l'ouverture du renfoncement.

Un autre mode de réalisation de la présente invention prévoit un système comprenant un terminal mobile du type susmentionné, et un socle d'accueil correspondant du terminal mobile, du type mentionné ci-dessus.

Selon un mode de réalisation de la présente invention, on prévoit un système dans lequel l'ergot du terminal et le renfoncement du socle ont des formes complémentaires, et sont tels que lorsque le terminal est positionné sur le socle, les plages métalliques du terminal sont en contact avec les contacts électriques du socle.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, est une vue en perspective représentant de façon très simplifiée un terminal de paiement électronique mobile ;
la figure 2 est une vue en perspective représentant de façon schématique un mode de réalisation d'un système comprenant un terminal de paiement électronique mobile et un socle d'accueil de ce terminal ;
les figures 3A et 3B sont des vues en coupe représentant de façon schématique, respectivement en position décrochée et en position raccrochée, un détail du terminal de la figure 2 et un détail correspondant du socle d'accueil ; et
la figure 4 est une vue en perspective et en coupe représentant de façon schématique une portion du socle de la figure 2.

### Description détaillée

Par souci de clarté, de mêmes éléments ont été désignés par de mêmes références aux différentes figures et, de plus, les diverses figures ne sont pas tracées à l'échelle. En outre, seuls les éléments utiles à la compréhension de l'invention ont été représentés et décrits.

Dans la présente description, on utilise les termes d'orientation et de positionnement "horizontal", "vertical", "inférieur", "supérieur", "largeur", "longueur", "hauteur", "latéral", "avant", "arrière" en se référant arbitrairement à une position normale d'utilisation d'un terminal de paiement, dans laquelle le clavier et l'écran du terminal sont dans un plan approximativement parallèle au sol (horizontal) et sont disposés du côté d'une face du terminal opposée au sol (face supérieure), la face du terminal définissant la fente d'insertion de carte à puce correspondant à l'avant du terminal. On utilise en outre les termes "transversal" et longitudinal, en se référant à des directions respectivement approximativement orthogonales aux faces latérales du terminal, et approximativement orthogonales aux faces avant et arrière du terminal.

On aurait pu penser à un système dans lequel le socle comprendrait un ergot parallélépipédique, en saillie selon une direction verticale (orthogonale au plan du socle), les contacts du socle étant supportés par une face verticale de l'ergot. Les contacts du socle seraient montés sur des ressorts dont la course se ferait selon une direction horizontale (orthogonale à la face de l'ergot supportant les contacts). Dans un tel système, le terminal comprendrait un renfoncement de forme complémentaire à l'ergot, des plages métalliques étant disposées sur une face du renfoncement affleurant la face de l'ergot supportant les contacts du socle lorsque le terminal reposerait sur le socle. Lorsque le terminal reposerait sur le socle, les ressorts des contacts du socle seraient en position comprimée, la force de rappel des ressorts contre les plages métalliques du terminal s'exerçant selon une direction horizontale. Ceci permettrait de garantir une bonne connexion électrique entre le terminal et le socle. Toutefois, la forme de l'ergot et du renfoncement correspondant imposerait une direction unique des mouvements de décroché/raccroché du terminal, ce qui rendrait ces mouvements peu aisés et sujets à des coincements.

La figure 2 est une vue en perspective représentant de façon schématique un exemple d'un mode de réalisation d'un système comprenant un terminal de paiement électronique mobile 21 et un socle d'accueil 23 de ce terminal.

Comme le terminal 1 de la figure 1, le terminal 21 comprend un boîtier 3, par exemple de forme générale sensiblement parallélépipédique, contenant notamment une carte de circuits électroniques (non représentée) à laquelle sont reliés divers composants périphériques, ici un clavier 5, un écran d'affichage 7, et un lecteur de carte à puce (non représenté) situé au fond d'une fente 10 ouverte uniquement en façade. D'autres composants périphériques, non représentés, peuvent être prévus. Le boîtier 3 comprend une face avant 3a, définissant la fente d'insertion 10, une face arrière 3b, une face supérieure 3c supportant l'écran et le clavier, une face inférieure 3d, et deux faces latérales opposées approximativement parallèles 3e et 3f. On notera que l'invention ne se restreint pas à ce type de terminal particulier. A titre d'exemple, dans certains terminaux, l'insertion de la carte à puce dans le lecteur peut se faire par une fente ouverte latéralement.

Le socle 23, par exemple de forme générale sensiblement parallélépipédique, comporte des faces avant 23a, arrière 23b, supérieure 23c, inférieure 23d, et latérales 23e et 23f. Le socle 23 contient notamment une carte de circuits électroniques, non représentée, à laquelle est relié un cordon de connexion électrique 25 se prolongeant à l'extérieur du socle 23, par exemple du côté de sa face latérale 23e dans l'exemple représenté, ou du côté de la face arrière 23b. Dans cet exemple, le cordon 25 est un cordon USB destiné à être relié à un ordinateur.

Lorsque le terminal 21 repose sur le socle 23, la face inférieure 3d du terminal est en contact avec la face supérieure 23c du socle. Le socle 23 est adapté à recevoir le terminal 21 en position horizontale, ou proche de l'horizontale, de façon qu'un utilisateur puisse encore utiliser le terminal lorsque celui-ci repose sur le socle. A titre d'exemple, lorsque le terminal repose sur le socle, les faces latérales 3e et 3f sont approximativement verticales, et la face supérieure 3c du terminal forme un angle inférieur à 20° et de préférence compris entre 10 et 15°, par exemple un angle de 12°, avec l'horizontale.

Le socle 23 comprend, du côté de sa face supérieure 23c, un ergot 26 en saillie selon une direction principale d26 inclinée vers l'avant par rapport à la verticale. Dans cet exemple, l'ergot 26 s'étend transversalement, à proximité de la face arrière 23b. L'ergot 26 comprend des faces avant 26a et arrière 26b, respectivement situées du côté des faces avant 23a et arrière 23b du socle 23. Du côté de sa face avant 26a, l'ergot 26 comprend un pan 27, incliné selon une direction secondaire d27 inclinée vers l'arrière par rapport à la direction d26. Selon un mode de réalisation, la direction d27 est approximativement verticale. Le pan incliné 27 supporte des contacts 28, quatre dans cet exemple. Les contacts 28 sont destinés à conduire des signaux d'alimentation et/ou des signaux logiques. On notera que l'invention ne se restreint pas à cette configuration particulière. L'homme de l'art saura également mettre en oeuvre le fonctionnement recherché en disposant le pan incliné 27 du côté de la face arrière 26b de l'ergot. Toutefois, dans un mode de réalisation préféré de la présente invention, le pan incliné 27 est disposé du côté de la face avant de l'ergot.

Le boîtier 3 du terminal 21 comprend, dans sa face inférieure 3d, un renfoncement 30, de forme complémentaire à l'ergot 26, s'étendant principalement transversalement, à proximité de la face arrière 3b. Le renfoncement 30 comprend un pan incliné (non représenté en figure 2) adapté à venir en contact avec le pan incliné 27 du socle lorsque le terminal repose sur le socle. Le pan incliné du terminal supporte des contacts 31, quatre dans cet exemple, adaptées à venir s'appuyer contre les contacts 28 du socle lorsque le terminal repose sur le socle.

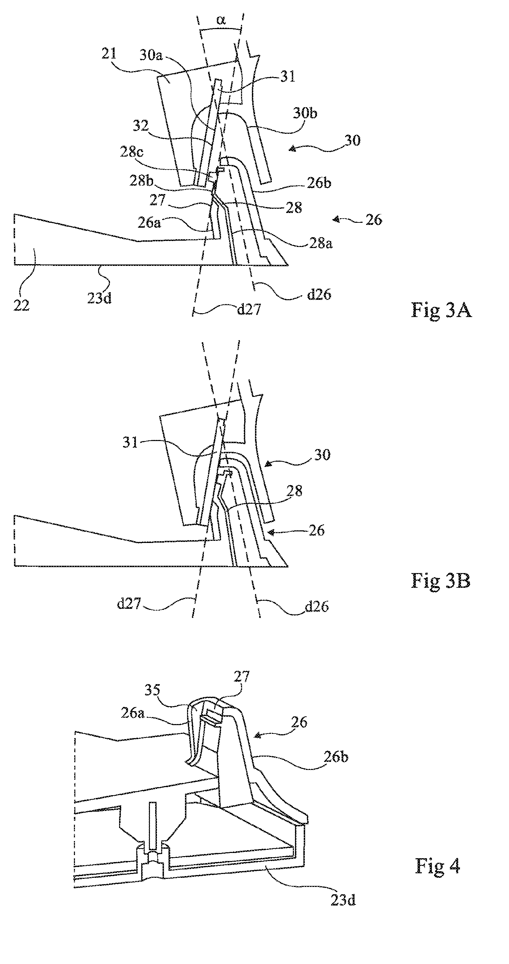

Les figures 3A et 3B sont des vues en coupe, selon un plan parallèle aux faces latérales du socle et du terminal de la figure 2, représentant de façon plus détaillée, respectivement en position décrochée et en position raccrochée, l'ergot 26 et le renfoncement 30 correspondant.

Comme l'illustrent les figures 3A et 3B, la direction principale d26 de saillie de l'ergot 26 est légèrement orientée vers l'avant du socle par rapport à la verticale et la direction d27 d'inclinaison du pan 27 est légèrement orientée vers l'arrière du socle par rapport à la direction d26. A titre d'exemple, la direction d26 fait un angle de l'ordre de 5 à 15 ° et de préférence compris entre 8 et 12°, par exemple un angle de 10°, avec la verticale, et la direction secondaire d27 fait un angle α de l'ordre de 5 à 30° et de préférence compris entre 17 et 21°, par exemple un angle de 19°, avec la direction d26. Par ailleurs, le pan incliné 27 se prolonge sensiblement jusqu'au sommet de l'ergot. Plus généralement, le plan comprenant le pan incliné 27 intersecte la direction principale d26, et le plan comprenant la face inférieure 23d du socle, sans intersecter l'ergot. En outre, le sommet de l'ergot à une forme arrondie, et les faces avant 26a et arrière 26b de l'ergot sont de préférence légèrement inclinées selon des directions distinctes se rejoignant du côté du sommet de l'ergot. A titre d'exemple, les directions d'inclinaison des faces avant 26a et arrière 26b de l'ergot forment un angle de l'ordre de 2 à 10°, par exemple un angle de 8°. L'ergot 26 supporte des contacts 28 (un seul contact 28 est visible sur la figure). Dans un mode de réalisation préféré, les faces avant 26a et arrière 26b sont inclinées selon des directions distinctes se rejoignant du côté du sommet de l'ergot, et la direction d27 d'inclinaison du pan 27 est inclinée par rapport à la direction principale d26 et par rapport à la direction (non référencée sur la figure) d'inclinaison de la face avant 26a.

Dans cet exemple, chaque contact 28 est constitué d'une lame ressort se terminant par une zone de contact, par exemple en forme de cuillère, située principalement dans le volume de l'ergot. Le manche 28a de la cuillère est fixé à l'ergot du côté de la face inférieure 23d du socle, et le dos 28b de la cuillère affleure une ouverture formée dans le pan incliné 27. En outre, le dos 28b de la cuillère comprend, optionnellement, une excroissance 28c faisant saillie par rapport au pan incliné 27, vers l'avant de l'ergot.

Le renfoncement 30 du terminal comprend des parois avant 30a et arrière 30b, coïncidant respectivement avec les faces avant 26a et arrière 26b de l'ergot lorsque le terminal repose sur le socle (figure 3B). Du côté de sa paroi avant 30a, le renfoncement 30 comprend un pan incliné 32 adapté à venir en contact avec le pan incliné 27 du socle. Le pan incliné 32 s'étend depuis le fond jusqu'à l'ouverture du renfoncement 30. Lorsque le terminal repose sur le socle, le plan comprenant le pan incliné 32 intersecte la direction d26 vers le haut (du côté du fond du renfoncement). Le pan incliné 32 supporte des plages métalliques 31 (une seule plage 31 est visible sur la figure). Chaque plage de contact 31 s'étend depuis le fond jusqu'à l'ouverture du renfoncement.

Lorsqu'un utilisateur raccroche le terminal sur le socle, les plages métalliques 31 du terminal viennent glisser contre les excroissances 28c des contacts 28 du socle. En position raccrochée, les lames de contact 28 du socle sont en compression, selon une direction approximativement orthogonale au pan incliné 27. Pour garantir un bon contact électrique, la trajectoire de glissement des plages 31 contre les excroissances 28c doit être suffisamment longue. Ceci permet notamment un nettoyage des contacts par frottement à chaque mouvement de raccroché (ou de décroché) du terminal. En outre, la zone de contact, en position raccrochée, entre une lame 28 et la plage 31 correspondante, doit être suffisamment longue. A titre d'exemple, la longueur de la trajectoire de glissement doit être comprise entre 2 et 5 mm (par exemple de l'ordre de 3 mm), et la longueur de la zone de contact en position raccrochée doit être comprise entre 1 et 2 mm (par exemple de l'ordre de 1,2 mm).

Un avantage de la structure proposée est qu'elle permet de garantir une bonne connexion électrique entre le socle et le terminal, notamment grâce à la faible inclinaison, par rapport à la verticale, du plan dans lequel sont formés les contacts électriques.

Un autre avantage de la structure proposée est que les mouvements de décroché/raccroché du terminal sur le socle sont plus aisés que dans les solutions existantes. En effet, les directions d'inclinaison d26 de la face arrière 26b de l'ergot et d27 du pan incliné 27 de l'ergot, forment un angle α non nul, et le sommet de l'ergot a une forme arrondie. Il en résulte que le système ergot 26 / renfoncement 30 n'impose pas une direction unique des mouvements de décroché/raccroché, à la différence d'un ergot parallélépipédique présentant des faces avant et arrière verticales. La facilité des mouvements de décroché/raccroché se trouve encore améliorée si les faces avant 26a et arrière 26b de l'ergot sont inclinées selon des directions distinctes se rejoignant du côté du sommet de l'ergot. En effet, l'angle formé par les faces avant et arrière de l'ergot permet d'éviter un éventuel coincement du terminal. De plus, dans la structure proposée, aucun point de blocage entre le socle et le terminal n'est nécessaire pour garantir une bonne connexion électrique.

Un autre avantage de la structure proposée est que lors des opérations de décroché/raccroché du terminal sur le socle, les plages métalliques de contact du terminal glissent contre les contacts du socle, ce qui contribue à nettoyer les zones de contact électrique susceptibles de s'encrasser au cours du temps. En outre, les plages métalliques 31 du terminal s'étendent jusqu'à l'ouverture du renfoncement 30, et le pan incliné 27 du socle s'étend jusqu'au sommet de l'ergot 26. Ainsi, lors d'une opération de raccroché, à aucun moment le plastique du socle ou du terminal ne vient frotter contre des métallisations de contact. Ceci permet d'éviter un encrassement des contacts lié à des dépôts de poussières de plastique. Par ailleurs, plus l'angle entre les faces avant 26a et arrière 26b de l'ergot est faible, moins les risques de frottement plastique/métal sont élevés.

Un autre avantage de la structure proposée réside dans la légère inclinaison de la direction principale d26 de saillie de l'ergot 26, vers l'avant du socle. Il résulte de cette inclinaison que le système proposé est adapté à un mouvement naturel de raccroché/décroché d'un terminal sur un socle.

En outre, du fait de la présence d'un ergot en saillie du socle, lorsque le terminal repose sur le socle, un utilisateur peut insérer une carte à puce dans la fente d'insertion 10 définie par la face avant 3a du terminal, sans risque de faire glisser le terminal en dehors de son socle. En effet, l'ergot 26 permet de retenir le terminal lors de la poussée, orthogonale à la face avant 3a, exercée par l'utilisateur au moment de l'insertion d'une carte à puce dans la fente 10.

La figure 4 est une vue en perspective et en coupe représentant de façon schématique un exemple de réalisation de l'ergot 26 de la figure 2. Dans cet exemple, l'ergot 26 comprend, du côté de sa face avant 26a, de part et d'autre du pan incliné 27, des joues 35 (une seule joue 35 est visible sur la figure) encadrant le pan incliné 27. Chaque joue 35 a par exemple la forme d'un pan vertical orienté selon une direction longitudinale par rapport au socle. Les joues 35 permettent de protéger le pan incliné 27 supportant les contacts du socle contre d'éventuels frottements avec le boîtier du terminal lors des opérations de raccroché et de décroché, ce qui pourrait conduire à un encrassement des contacts. En outre, les joues 35 permettent de guider le terminal lors d'une opération de raccroché, en garantissant un bon atterrissage du terminal sur le socle (glissement des plages métalliques du terminal contre les contacts du socle).

Des modes de réalisation particuliers de la présente invention ont été décrits. Diverses variantes et modifications apparaîtront à l'homme de l'art.

En particulier, l'invention ne se limite pas aux formes générales de socle et de terminal décrites et représentées ci-dessus. L'homme de l'art saura mettre en oeuvre le fonctionnement recherché dans des systèmes dans lesquels le terminal et le socle présentent des formes différentes. Notamment, l'homme de l'art saura mettre en oeuvre le fonctionnement recherché dans le cas d'un système comprenant un socle adapté à recevoir un terminal en position verticale.

Par ailleurs, l'invention ne se restreint pas au cas particulier présenté ci-dessus dans lequel le socle et le terminal comprennent chacun quatre contacts distincts.

En outre, l'invention ne se restreint pas au cas particulier décrit en relation avec les figures 3A et 3B dans lequel les contacts du socle comprennent chacun une lame ressort en forme de cuillère. L'homme de l'art saura mettre en oeuvre le fonctionnement recherché en utilisant d'autres types de contacts à ressort.

## Revendications

1. Socle (23) d'accueil d'un terminal mobile, comportant un ergot (26) en saillie d'une face (23c) supérieure selon une direction principale (d26), dans lequel :
l'ergot comprend des faces avant (26a) et arrière (26b) inclinées selon des directions distinctes se rejoignant du côté du sommet de l'ergot ; et
l'ergot comprend, du côté de sa face avant (26a), un pan (27) supportant des contacts électriques (28), incliné par rapport à la direction principale (d26) et par rapport à la face avant, et s'étendant sensiblement jusqu'au sommet de l'ergot.

2. Socle selon la revendication 1, dans lequel le sommet de l'ergot (26) a une forme arrondie.

3. Socle selon la revendication 1 ou 2, dans lequel lesdits contacts électriques (28) sont à ressort.

4. Socle selon l'une quelconque des revendications 1 à 3, dans lequel l'ergot (26) comprend des joues (35) encadrant le pan incliné (27), chaque joue (35) ayant la forme d'un pan vertical orienté selon une direction longitudinale par rapport au socle.

5. Terminal mobile (21) comportant un boîtier (3) présentant un renfoncement (30) selon une direction principale (d26), dans lequel :
le renfoncement comprend des parois avant et arrière inclinées selon des directions distinctes se rejoignant du côté du fond du renfoncement ; et
le renfoncement comprend, du côté de sa paroi avant, un pan (32) supportant des plages métalliques de connexion électrique (31), incliné par rapport à la direction principale (d26) et par rapport à la paroi avant, et s'étendant sensiblement jusqu'au fond du renfoncement.

6. Terminal mobile selon la revendication 5, dans lequel les plages de contact métalliques (32) s'étendent jusqu'à l'ouverture du renfoncement.

7. Système comprenant un terminal mobile (21) selon la revendication 5 ou 6, et un socle d'accueil (23) dudit terminal mobile (21), selon l'une quelconque des revendications 1 à 4.

8. Système selon la revendication 7, dans lequel l'ergot (26) du terminal (21) et le renfoncement (30) du socle (23) ont des formes complémentaires, et sont tels que lorsque le terminal est positionné sur le socle, les plages métalliques (31) du terminal sont en contact avec les contacts électriques (28) du socle.
